# EUROPEAN PATENT SPECIFICATION

(11) **EP 1 338 439 B1**
(45) Date of publication and mention of the grant of the patent: **24.12.2008**
(21) Application number: 00974888.0
(22) Date of filing: 09.11.2000
(51) Int. Cl.: B60C 7/00, B60C 1/00, B60C 7/24, B60B 21/02, C08L 21/00

(54) **VEHICLE WHEEL**
FAHRZEUGRAD
ROUE DE VEHICULE

(43) Date of publication of application: 27.08.2003
(73) Proprietor: Aichi Tire Industry Co., Ltd, Nagoya-shi, Aichi 466-0064 (JP)
(72) Inventor: TANEMURA, Hiroshi, Kasugai Div.Aichi Tire Ind.Co., Kasugai-shi, Aichi 486-0808 (JP); MAKINO, Tetsunori, Kasugai Div. Aichi Tire Ind.Co., Kasugai-shi, Aichi 486-0808 (JP); FURUTA, Shinji, Kasugai Div. Aichi Tire Ind.Co.Ltd, Kasugai-shi, Aichi 486-0808 (JP); UENO, Kazuyoshi, Kasugai Div.Aichi Tire Ind.Co Ltd, Kasugai-shi, Aichi 486-0808 (JP); MURATA, Tatsuru, Kasugai Div.Aichi Tire Ind.Co.Ltd, Kasugai-shi, Aichi 486-0808 (JP); KATO, Hisaki, Kasugai Div.Aichi Tire Ind.Co.Ltd, Kasugai-shi, Aichi 486-0808 (JP)
(74) Representative: Vetter, Hans
(86) International application number: PCT/JP2000/007911
(87) International publication number: WO 2002/038398

(56) References cited:
- DE-A1- 3 405 039
- DE-A1- 3 406 007
- GB-A- 1 341 700
- GB-A- 2 021 493
- JP-A- 5 139 110
- JP-A- 9 003 244
- JP-A- 10 315 706
- JP-A- 11 246 708
- JP-A- 2000 025 410
- US-A- 4 566 515
- US-A- 5 429 165

## Description

TECHNICAL FIELD OF THE INVENTION

This invention relates to a right-left asymmetric vehicle wheel for use in industrial and construction vehicles such as forklifts.

BACKGROUND OF THE INVENTION

Conventionally, there has been a well-known 4-piece rim with inclined seat (Symbol TB: JATMA-YEAR-BOOK-2000 (Japan Automobile Tire Manufacturers Association)) provided with a bead seat band, a side flange and a locking ring. Since this rim with inclined seat consists of 4 pieces, assembling of the rim requires extra worker-hours.

In order to reduce the worker-hours for assembling, a wheel having a rim with a tire mounted thereon without using the bead seat band, side flange and locking ring has been disclosed in the Unexamined Japanese Patent Publication No. 54-131202.

However, such a conventional wheel produces defective assembling, slipping, misaligned rim, damages in a protrusion caused by these inconveniences, etc., if a radial or axial fitting margin for the rim and the tire is not appropriate. Similarly, defective assembling, slipping, misaligned rim, damages in a protrusion caused by these inconveniences, etc. are also produced if the diameter or wideness of a bead core used is not appropriate.

In addition, if a base rubber does not have properties required, not only slipping, misaligned rim, etc. are produced, but also a protrusion of the base rubber does not fit into a recess of the rim at one try. Then, the protrusion has to be pushed into the recess of the rim once again upon assembling, and the working property is considered unfavorable. Moreover, there may be damages produced in the protrusion upon rim assembling. Document GB2021493 discloses a vehicle wheel according to the preamble of claim 1.

SUMMARY OF THE INVENTION

One object of the present invention is to provide a vehicle wheel for preventing defective assembling, slipping, misaligned rim, and damages caused by the foregoing inconveniences.

In order to attain the above object, the present invention provides a vehicle wheel comprising a rim on which a solid-core tire having a tread rubber layer and a base rubber layer in which bead cores are arranged is mounted. The rim is provided with a rim flange on one side face and with a recess on the other side face. The tire is provided with a protrusion to be fitted into the recess. A height of the base rubber layer is set to be 20-70% of a tire height. The base rubber layer has a tensile stress of 1.5-5 MPa at 10% elongation in JIS-K6251: Dumbbell type NO. 1 shape for vulcanized rubber tension test method, and a hardness of A70-100 degrees in JIS-K6253: Type A durometer hardness test.

A radial fitting margin of the tire when mounted on the rim may be set to be 1-4%, and an axial fitting margin may be set to be -2-5%. The inner peripheral length of the bead cores may be 1.01-1.04 times larger than the outer peripheral length of the rim, a sum of widths of the bead cores may be 15-35% of a rim width, and the bead core may be arranged at positions within a range of 30-90% of a tire width. It is preferable that a width of the recess is set to be 5-30% of the rim width, a depth of the recess is set to be 2-8% of a rim diameter, an angle of the recess is set to be 15-90 degrees, and a height of an axially outer end of the recess is equal to or more than the depth of the recess. The base rubber layer may comprise a rubber component including 20-80PHR of butadiene rubber containing at least 5 weight % of syndiotactic-1, 2-polybutadiene, and as much other diene rubber as to make a total of 100PHR of all the diene rubber included. The base rubber layer may be composed of diene rubber and comprise 1-30PHR of polyamide short fiber which is chemically bonded to the diene rubber. The base rubber layer may comprise a rubber component including 20-60PHR of butadiene rubber containing at least 5 weight % of cyndiotactic-1, 2-polybutadiene and as much other diene rubber as to make a total of 100PHR of all the diene rubber included, and further comprises 1-20PHR of polyamide short fiber chemically bonded to the diene rubber per 100PHR of the rubber component. Base rubber forming the base rubber layer may be composed of diene rubber containing phenol resin, in which the diene rubber comprises a rubber component including 20-50PHR of styrene-butadiene copolymer rubber containing 40-50 weight % of combined styrene and produced by solution polymerization, and as much other diene rubber as to make a total of 100PHR of all the diene rubber included.

BRIEF DESCRIPTION OF THE DRAWINGS

The invention will now be described in detail, by way of examples, with reference to the accompanying drawings, in which

Fig. 1 is a cross sectional view of a vehicle wheel as an embodiment of the present invention; and

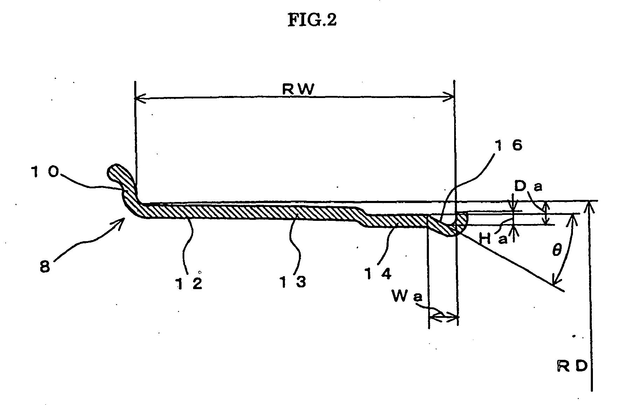

Fig. 2 is an enlarged cross sectional view of a rim of the present invention.

DETAILED DESCRIPTION OF THE PREFERRED EMBODIMENT

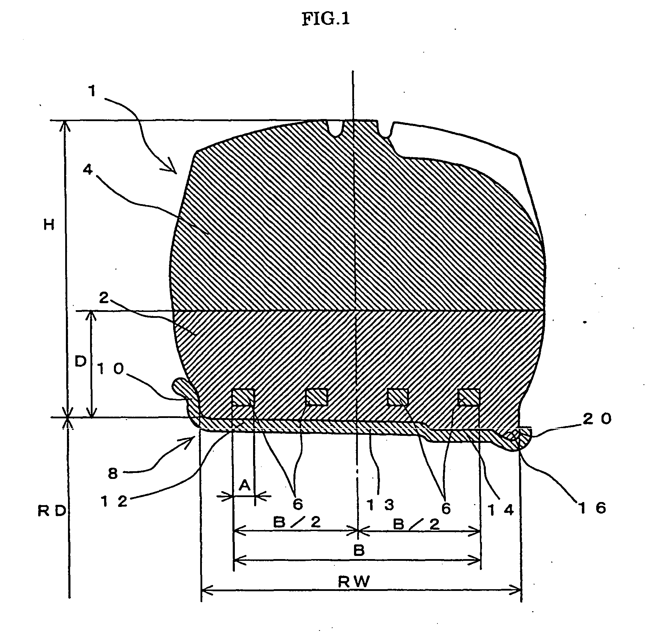

As shown in Fig. 1, a tire 1 comprises a base rubber layer 2 facing to a rim and a tread rubber layer 4 facing to a road surface. Bead cores 6 are arranged in the base rubber layer 2. The tire 1 is mounted on a rim 8, and the rim 8 comprises a rim flange 10 on one side face.

The rim 8 comprises a taper part 12 leading to a rim flange 10. The rim 8 comprises a first flat part 13 connecting with the taper part 12, and a second flat part 14 connecting with the first flat part 13. Also, a recess 16 connecting with the second flat part 14 is formed on the other side face. The recess 16 is continuously formed in a circumferential direction. When the tire 1 is mounted on the rim 8, the base rubber layer 2 abuts on the taper part 12, first flat part 13 and second flat part 14 leaving no space between. The base rubber layer 2 has a protrusion 20 which fits into the recess 16.

The base rubber layer 2 is formed so that a height D of the base rubber layer 2 in the meridian plane including a tire axis is set to be 20-70% of a tire height H. It is not preferable that the height D of the base rubber layer 2 falls below 20%, since the stiffness of the base rubber layer 2 becomes small, distortion becomes too large, transverse stiffness also becomes too small, and at the same time, misaligned rim is likely to be produced. Furthermore, the base rubber layer 2 which prevents rim slip becomes too thin and thus, slipping may occur if the rubber is deteriorated due to long-term use. This is not desirable.

Furthermore, it is not preferable for reason of performance that the height D of the base rubber layer 2 is too small, since the transverse stiffness on the protrusion 20 side tends to be relatively small against transverse displacement due to lack of a side flange, compared to the other side where the rim flange 10 is provided. When the rubber is deteriorated due to long-term use or an irregular overload (such as a strong impact) is applied, the distortion of the protrusion 20 may become large to cause the protrusion 20 to be damaged. Then, the tire 1 may come off from the rim 8, or the damage in the protrusion may expand to cause base destruction. If the height D of the base rubber layer 2 is set to be at least 20% of the tire height H, such troubles can be avoided and the protrusion 20 can be protected.

It is not preferable that the height D of the base rubber layer 2 exceeds 70% of the tire height H, since the tread rubber layer 4 having large elasticity becomes relatively too thin, and lowers the property to moderate and absorb various impacts received during traveling of the vehicle. Heat generation in the-tread rubber layer 4 also tends to increase, and at the same time, riding quality is worsened.

As to properties of the base rubber layer 2, the base rubber layer 2 is formed to have a tensile stress of 1.5-5 MPa at 10% elongation in JIS-K6251: Dumbbell type NO. 1 shape for vulcanized rubber tension test method. If the base rubber layer 2 has a tensile stress less than 1.5 MPa at 10% elongation, the protrusion 20 of the base rubber layer 2 does not fit into the recess 16 of the rim 8 correctly at one try upon assembling. The protrusion 20 of the base rubber layer 2 falls off from a tip of the rim and is expanded to the radial direction, not falling into place. This is not preferable since this part has to be pushed in once again, and extra worker-hours are required. In this case, it is preferable that a compression set is set to be equal to or less than 50% (JIS-K6262: testing condition of 70°C × 24 hours). It is not preferable that the compression set exceeds 50%, since the setting property of the rubber becomes too large, and the protrusion 20 of the base rubber layer 2 tends to fall off from the tip of the rim and be expanded to the radial direction, not falling into place, upon rim assembling.

It is not desirable that the base rubber layer 2 has a tensile stress below 1.5 MPa at 10% elongation. Because slipping between the tire base 1 and the rim 8 is likely to occur when the load is heavy. This slipping is considered to be produced since a sufficient fitting margin in the width direction cannot be obtained due to lack of a side flange on the protrusion 20 side. The rubber thickness under the bead cores 6 may be equalized by changing the diameter of the bead cores 6 to change the radial positions of the same. Remarkable improvement in fitness of the protrusion 20 into the recess 16 upon rim assembling can be achieved by setting the tensile stress to be at least 1.5 MPa at 10% elongation. Moreover, slipping of the tire having such asymmetric base structure can be effectively prevented.

It is not desirable that the tensile stress exceeds 5MPa at 10% elongation, since rim assembling property is lowered due to the too stiff base rubber layer 2. Furthermore, if the tensile stress exceeds 5MPa, the rubber hardly expands. The protrusion 20 may not be able to bear deformation upon assembling, and cracks may be generated. Furthermore, the tire may be torn. The tensile stress of or less than 5MPa at 10% elongation can prevent the protrusion 20 from being damaged.

The base rubber layer 2 has a hardness of A70-100 degrees in JIS-K6253: Type A durometer hardness test. It is not desirable that the hardness of the base rubber 2 falls below 70 degrees. Because tire stiffness becomes small, jolting and axial and circumferential flexure/vibration of the base rubber layer 2 become heavy, and largely misaligned rim is produced. Furthermore, slipping is likely to occur and this is not desirable, either.

If hardness is too small, transverse stiffness of the protrusion 20 against transverse displacement tends to be relatively small due to lack of a side flange compared to the other side. When the rubber is deteriorated due to long-term use or irregular overload (such as strong impact) is applied, distortion of the protrusion 20 becomes too large and the protrusion 20 may be damaged. As a result, the tire base 1 may come off from the rim 8 or the damage on the protrusion 20 may expand to cause destruction of the base rubber layer 2. This is not favorable for reason of tire performance. Such troubles can be avoided and the protrusion 20 can be protected if the hardness is set to be at least 70 degrees.

It is not preferable that the hardness exceeds 100 degrees, since rim assembling property is lowered due to the too hard base layer 2. It is not desirable-since the protrusion 20 may be damaged by repeated forcible assembling resulting from the difficulty of assembling. Moreover, if the hardness is equal to or more than 100 degrees, the amount of resin to be mixed to raise hardness of the base rubber layer 2 is generally increased, and the flex/crack resistance is lowered. It is not preferable since cracks are likely to be generated like plastic when various impacts are applied or the tire gets a cut to be further widened. Since the protrusion 20 has no protection of a side flange, it is not preferable that the rubber is made extremely hard to be like plastic which is weak in cracks. If the hardness is set to be equal to or less than 100 degrees, such troubles can be avoided and the protrusion 20 can be protected.

It is preferable that a height of the tread rubber layer 4 is set to be 30-80% of the tire height H, and the hardness thereof is set to be 50-75 degrees. If the height is lower than 30%, the property to moderate and absorb various impacts received during traveling of the vehicle is deteriorated and heat generation in the tread rubber layer 4 tends to increase. At the same time, riding quality is worsened and this is not favorable. If the height exceeds 80%, stiffness as a tire is reduced. It is not desirable since one-sided abrasion is also likely to occur. If the hardness falls below 50 degrees, stiffness as a tire tends to be small and abrasion tends to be large. One-sided abrasion is also likely to occur and this is not favorable. If the hardness exceeds 75 degrees, it is not preferable since riding quality is worsened owing to the too hard tread rubber layer 4.

An intermediate rubber layer may be provided between the tread rubber layer 4 and the base rubber layer 2. It is preferable that the intermediate rubber layer has a height of 10-45% of the tire height H, and a hardness of 45-65 degrees. It is further preferable that the intermediate rubber layer 4 has hardness smaller than that of the tread rubber layer 4. If the height is smaller than 20%, there is a tendency that improved effects of cushion property and heat generation property are reduced. If the height exceeds 45%, it is not preferable since there is a tendency that stiffness of the tire becomes small. If the hardness falls below 45 degrees, it is not preferable since stiffness of the tire tends to be small. If the hardness exceeds 65 degrees, it is not preferable since improved effects of cushion property and the like tend to be reduced.

In the tire 1, a radial fitting margin when the rim 8 is assembled is set to be 1-4% and an axial fitting margin is set to be - 2-5%. In case of a general solid-core tire, those ratios are set in balance on how easy the assembling becomes and how difficult slipping becomes using a fitting margin for a large bead diameter and a fitting margin for a small bead diameter. However, the tire of the present invention is right-left asymmetric, and the fitting margin for the tire 1 and the rim 8 on a radial meridian plane is set to be within 1-4%. Every part of the fitting margin is preferably set to be within 1-4%. It is not preferable that the radial fitting margin is set to be less than 1%, since this is likely to cause slipping. It is also not preferable that the fitting margin is set to be too small, since the protrusion 20 may easily come off when an irregular large load is applied to the axial direction on the protrusion 20 side of the base rubber layer 2. If the fitting margin is more than 4%, it is not favorable since the base rubber layer 2 especially on the protrusion 20 side becomes difficult to be assembled. In this case, repeated forcible assembling may damage the protrusion 20 of the base rubber layer 2, and this is not desirable. Such troubles can be avoided and assembling with protection of the protrusion 20 is possible by setting the radial fitting margin to be 1-4%.

The axial fitting margin is set to be - 2-5%. It is not preferable that the axial fitting margin is set to be less than -20%, since a gap produced in the recess 16 of the protrusion 20 on the axially outer side becomes too large and the protrusion 20 may rub and wear during traveling of the vehicle. On the contrary, if the axial fitting margin exceeds 5%, it is difficult for the protrusion 20 to fit into the recess 16. It is not preferable since assembling becomes difficult. In this case, repeated forcible assembling may damage the protrusion 20 of the base rubber layer 2, and this is not desirable. During traveling of the vehicle, the side portion of the protrusion 20 protruding to the axially outer side from the recess 16 may rub against the edge of the recess 16 if the fitting margin is large. This is not preferable since it may cause cracks. Such troubles can be avoided by setting the axial fitting margin to be - 2-5%, and assembling as well as traveling of the vehicle with protection of the protrusion 20 is possible.

The inner peripheral length of the bead cores 6 arranged inside the base rubber layer 2 is 1.01-1.04 times larger than the outer peripheral length of the rim 8 (rim diameter RD × π), and a sum of widths of the bead cores 6 in a direction toward a tire axis-is 15-35% of a width RW of the rim 8. The bead cores 6 create a so-called hoop effect. They serve to hold the tire base 1 on the rim 8. It is not preferable that the inner peripheral length of the bead cores 6 is equal to or less than 1.01 times larger than the outer peripheral length of the rim 8, since the too small inner peripheral length of the bead cores 6 makes rim assembling difficult and the too thin rubber under the bead cores 6 allows easy destruction of the tire (lowering of durability) upon assembling as well as during traveling of the vehicle. If the inner peripheral length of the bead cores 6 is set to be at least 1.01 times larger than the outer peripheral length of the rim 8, smooth assembling is possible. If the inner peripheral length of the bead cores 6 is more than 1.04 times larger, assembling property is improved but the hoop effect is reduced. It is not preferable since slipping is easy to occur.

A sum of widths in the direction of the tire axis of the bead cores 6 (the number of bead cores 6 × a width A of a bead core 6) is set to be 15-35% of the rim width RW. The bead cores create a so-called hoop effect. They serve to hold the tire 1 on the rim 8. It is necessary to set a sum of the widths of the bead cores 6 to be 15-35% which is larger than usual, since a sufficient fitting margin in a width direction cannot be obtained for lack of a side flange on the protrusion 20 side. As can be seen in the Unexamined Patent Publication No. 10-193913, the usual sum of the widths is 10-21%. It is preferable that the sum of the widths in the direction toward the tire axis of the bead cores 6 falls below 15%, since slipping of the tire is easy to occur. It is not desirable that the sum of the widths exceeds 35%, since rim assembling becomes difficult.

Assuming that the axial positions of the bead cores 6 are calculated by (B/RW × 100), a position B of an outer bead core 6 is in a range of 30-90% of a tire bead width RW. If the position of the outer bead core 6 falls below 30% of the tire bead width RW in the direction toward the tire axis, the fitting pressure by a hoop effect in the outer side of the tire is reduced. It is not preferable since slipping is easy to occur. If the position of the outer bead core 6 exceeds 90%, deformation allowance specifically in the radial direction of the rubber in the vicinity of a tire opening when the rim 8 is inserted becomes small since the bead cores 6 are arranged too outer side upon rim assembling. There is a tendency that the rim assembling property is worsened. Particularly in the protrusion 20, the deformation allowance of the rubber becomes too small when the protrusion 20 crosses over the axially outermost edge (garter part) of the recess 16 of the rim 8. It is not preferable since the protrusion 20 is easily damaged due to the excess load and deformation. Furthermore, if the bead cores 6 are arranged in too outer side, it is not preferable since the bead core 6 is easily exposed when misaligned rim is produced.

As above, by setting the outer bead core 6 to be up to 90%, it is possible to provide sufficient deformation allowance of the rubber on the protrusion 20. It is possible for the protrusion 20 to be difficult to be damaged. Additionally, if an inner bead core 6 exceeds 50%, the fitting pressure due to a hoop effect in the center part of the tire is reduced. It is not desirable since slipping is easy to occur. It is preferable that the bead cores 6 are arranged at an interval as even as possible in the axial direction.

It is preferable that a recess width Wa is set to be 5-30% of the rim width RW, more preferably 7-20%. If the recess width Wa falls below 5%, the width Wa of the recess 15 becomes too small, and resistance to a transverse load applied on the protrusion 20 against a load in the transverse direction of the tire becomes small. It is not preferable for reason of- tire performance since the protrusion 20 may be damaged or fall off from the recess 16 when the rubber is deteriorated for long-term use or an irregular overload (such as strong impact) is applied. If the width Wa exceeds 30%, resistance when the protrusion 20 crosses over the axially outer edge (garter part) of the recess 16 becomes large upon assembling. There is a tendency that assembling resistance is increased, and it is not desirable since it makes assembling difficult.

A depth Da of the recess 16 is set to be 2-8% of a rim diameter RD, more preferably 3-5%. If the depth Da is set to be less than 2%, the depth Da of the recess 16 becomes too shallow and resistance to a transverse load applied on the protrusion 20 against a load in the transverse direction of the tire becomes small. It is not preferable since the protrusion 20 may be damaged or fall off from the recess 16 when the rubber is deteriorated for long-term use or an irregular overload (such as strong impact) is applied. If the depth Da is more than 8%, resistance when the protrusion 20 crosses over the axial outer edge (garter part) of the recess 16 becomes large upon assembling. There is a tendency that assembling resistance is increased, and it is not desirable since it makes assembling difficult.

The angle θ of the recess 16 is 15-90 degrees, more preferably 22-60 degrees. Setting the angle θ to be 15-90 degrees allows the angle θ of the protrusion 20 to have favorable assembling property, durability, etc. If the angle θ exceeds 90 degrees, resistance when the protrusion 20 abuts the axial edge (garter part) of the recess 16 upon assembling becomes too large. This is not desirable since assembling becomes difficult. The protrusion 20 itself cannot bear deformation upon assembling and may obtain cracks or further be torn. Moreover, if the angle θ is equal to or more than 90 degrees, the protrusion 20 may be easily damaged when the rubber is deteriorated due to long-term use or an irregular over load (such as a strong impact) is applied. It is not desirable for reason of tire performance. A height Ha of the axially outer edge (garter part) of the recess 16 is equal to or more than the depth of the recess 16. Thereby, it is possible to prevent coming off of the protrusion 20 by a load applied in the transverse direction.

It is preferable that the edge height Ha is set to be 50-200% of the depth of the recess 16 (i.e. length from the second flat face14 or the first flat face 13 to the bottom of the recess 16). It is more preferable that the edge height Ha is set to be 70-150%, more preferably 80-120%. If the edge height Ha falls below 50%, the edge height Ha becomes too small, and resistance to a transverse load applied on the protrusion 20 against a load in the transverse direction of the tire becomes small. It is not preferable since the protrusion 20 is likely to be damaged or fall off from the recess 16 when the rubber is deteriorated due to long-term use or an irregular overload (such as strong impact) is applied. If the edge height Ha exceeds 200%, the edge height Ha is too large and resistance when the protrusion 20 crosses over the edge (garter part) because large upon assembling. There is a tendency that assembling resistance is increased, and it is not preferable since it makes assembling difficult. Furthermore, if the edge height Ha exceeds 200%, the protrusion 20 cannot bear deformation when abutted against the edge and cracks may be produced. This is not desirable since the protrusion 20 may further be torn. The above troubles can be avoided by setting the edge height Ha as the above, and protection of the protrusion 20 and prevention of falling off can be achieved.

Base rubber forming the base rubber layer 2 comprises a rubber component including 20-80PHR of butadiene rubber containing at least 5 weight % of syndiotactic-1, 2-polybutadiene, and as much other diene rubber, such as natural rubber, SBR, BR, etc., as to make a total of 100PHR of all the diene rubber included. In addition to the above, filler like carbon black, general rubber chemicals such as vulcanizing agent, etc. are added to form a rubber composition.

The base rubber requires as the properties a tensile stress of 1.5-5MPa at 10% elongation in JIS-K6251: Dumbbell type NO. 1 shape for vulcanized rubber tension test method, and a hardness of A70-100 degrees in JIS-K6253: Type A durometer hardness test. The base rubber having the following properties can be obtained by mainly using diene rubber including 20-80PHR of butadiene rubber containing at least 5 weight % of syndiotactic-1, 2-polybutadiene.

**Table 1. Composition and property data**

| PHR | | | | | |
|---|---|---|---|---|---|
| | Comp.Ex.1 | Ex.1 | Ex.2 | Ex.3 | Ex.4 |
| natural rubber | 60 | 80 | 60 | 40 | 20 |
| butadiene rubber | 40 | - | - | - | - |
| VCR412 | - | 20 | 40 | 60 | 80 |
| carbon black (HAF) | 80 | 80 | 80 | 80 | 80 |
| cashew degenerated phenol resin | 5 | 5 | 5 | 5 | 5 |
| zinc flower No. 3 | 5 | 5 | 5 | 5 | 5 |
| stearic acid | 2 | 2 | 2 | 2 | 2 |
| wax | 2 | 2 | 2 | 2 | 2 |
| anti-oxidant 6C | 2 | 2 | 2 | 2 | 2 |
| aromatic oil | 20 | 20 | 20 | 20 | 20 |
| sulfur | 2 | 2 | 2 | 2 | 2 |
| vulcanization accelerator (BBS) | 1 | 1 | 1 | 1 | 1 |
| hexamethylenetetramine | 0.5 | 0.5 | 0.5 | 0.5 | 0.5 |
| Type A durometer hardness | 75 | 75 | 78 | 81 | 84 |
| 10% elongation (MPa) | 1.1 | 1.5 | 1.9 | 2.2 | 2.5 |
| compression set (%) | 35 | 34 | 32 | 29 | 28 |

Examples 1-4 show rubber compositions comprising a rubber component including 20-80PHR of butadiene rubber containing at least 5 weight % of syndiotactic-1, 2-polybutadiene which is highly crystalline and has high melting point, and as much other diene rubber as to make a total of 100PHR of all the diene rubber included. In addition to the above, carbon black, resin for purpose of increasing hardness such as cashew degenerated phenol resin, rubber chemicals for general use such as zinc flower No. 3, stearic acid, wax, antioxidant, aromatic oil, sulfur, vulcanization accelerator (BBS), etc. and hexamethylenetetramine that is a hardening agent of the cashew degenerated phenol resin are mixed to form the rubber compositions. The resin for purpose of increasing hardness such as cashew degenerated phenol resin may not be used.

Here, the butadiene rubber contains more than 5 weight % of syndiotactic-1, 2-polybutadiene. However, it is preferable that the butadiene rubber contains 7 or more weight % of syndiotactic-1, 2-polybutadiene. If the content falls below 5 weight %, it is not desirable since the tensile stress at 10% elongation and hardness tend to be lowered. As such butadiene rubber, VCR303, VCR412, VCR617, etc. by Ube Industries, Ltd. can be utilized. In the above Table 1, VCR412 which contains 12 weight % of syndiotactic-1, 2-polybutadiene was used.

The amount of butadiene rubber containing syndiotactic-1, 2-polybutadiene is 20-80PHR, more preferably 30-60PHR. If the amount falls below 20PHR, it is not desirable since the tensile stress at 10% elongation and hardness tend to be lowered. If the amount is equal to or over 80PHR, kneading becomes difficult, or bagging in a roll process becomes frequent. Thus, it is not desirable since overall working property as a compound is likely to decline. Moreover, it is not desirable since such butadiene rubber is of over quality.

As shown in Table 1, by mainly using the rubber component comprising 20-80PHR of butadiene rubber containing at least 5 weight % of syndiotactic-1, 2-polybutadiene, it is possible to obtain the tensile stress at 10% elongation and hardness required for the base rubber effectively. Also, such rubber composition is superior in compression set.

During various assembling, excess load may be applied on the protrusion 20 (Cuts and cracks may be generated on the protrusion 20 when the protrusion 20 crosses over the edge (garter part) of the recess 16 of the rim 8 upon assembling). By reinforcing the rubber composition with such syndiotactic-1, 2-polybutadiene which is highly crystalline and has high melting point, improvement in abrasion, crack resistance, etc. can be achieved. Thus, it is difficult for the protrusion 20 to obtain cuts and cracks. Furthermore, durability against the aforementioned damages is improved during traveling of the vehicle.

The hardness was tested by JIS-K6253: Type A durometer hardness test, the tensile stress at 10% elongation by JIS-K6251: vulcanized rubber tension test method (Tension speed was set to be 100mm/min to measure the tensile stress at lower elongation.), and the compression set by JIS-K6262: vulcanized rubber compression set test method, for 70°C × 24 hours.

It is preferable that carbon black as filler is classified as HAF grade or better and the amount to be used is 50-100PHR. Other than cashew degenerated phenol resin, other oil degenerated products or non-degenerated products can be used with proper ratio as phenol resin for raising hardness (they may not be used al all).

Generally, 3-15PHR of phenol resin is used. If the amount used is equal to or less than 3PHR, the hardness is not effectively raised. It is not desirable that the amount used is equal to or more than 15PHR, since flex/crack resistance of the rubber is lowered. Wax used may be microcrystalline wax, etc. Anti-oxidant used may be 6C, IPPD, ADPAL, TMDQ, PAN, DPPD, MBI, etc. Vulcanized accelerator used may be sulfenamide such as BBS and CBS. Hexamethylenetetramine was used as a hardening agent of phenol resin.

The base rubber forming the base rubber layer 2 may be a rubber composition composed of diene rubber and comprises 1-30PHR of polyamide short fiber chemically bonded to the diene rubber. Other than the above, the rubber composition may comprise filler such as carbon black and general rubber chemicals like vulcanizing agent.

The base rubber is required to have as the properties a tensile stress of 1.5-5MPa at 10% elongation in JIS-K6251: Dumbbell type NO. 1 shape for vulcanized rubber tension test method, and a hardness of A70-100 degrees in JIS-K6253: Type A durometer hardness test. The base rubber having the following properties can be obtained by mainly using a rubber composition mainly comprising 1-30PHR of polyamide short fiber chemically bonded to the diene rubber.

**Table 2. Composition and property data**

| PHR | | | | | | |
|---|---|---|---|---|---|---|
| | Comp.Ex.1 | Ex.5 | Ex.6 | Ex.7 | Ex.8 | Ex.9 |
| natural rubber | 60 | 60 | 60 | 60 | 60 | 60 |
| butadiene rubber | 40 | 40 | 40 | 40 | 40 | 40 |
| nylon short fiber amount | - | 1 | 5 | 10 | 20 | 30 |
| carbon black (HAF) | 80 | 80 | 80 | 80 | 80 | 80 |
| cashew degenerated phenol resin | 5 | 5 | 5 | 5 | 5 | 5 |
| zinc flower No. 3 | 5 | 5 | 5 | 5 | 5 | 5 |
| stearic acid | 2 | 2 | 2 | 2 | 2 | 2 |
| wax | 2 | 2 | 2 | 2 | 2 | 2 |
| anti-oxidant 6C | 2 | 2 | 2 | 2 | 2 | 2- |
| aromatic oil | 20 | 20 | 20 | 20 | 20 | 20 |
| sulfur | 2 | 2 | 2 | 2 | 2 | 2 |
| vulcanization accelerator (BBS) | 1 | 1 | 1 | 1 | 1 | 1 |
| hexamethylenetetramine | 0.5 | 0.5 | 0.5 | 0.5 | 0.5 | 0.5 |
| Type A durometer hardness | 75 | 75 | 78 | 81 | 83 | 85 |
| 10% elongation (MPa) | 1.1 | 1.5 | 2.1 | 3 | 3.8 | 4.3 |
| compression set (%) | 35 | 34 | 32 | 29 | 28 | 28 |

Examples 5-9 show rubber compositions composed of diene rubber, comprising 1-30PHR of polyamide short fiber chemically bonded to the diene rubber, filler such as carbon black, and general rubber chemicals like vulcanizing agent, etc. (BR (Butadiene rubber) in the above Table 2 may be replaced with SBR, etc.). Polyamide short fiber used in these examples is UBEPOL-HE0100 of FRR-NR, a product of Ube Industries, Ltd. FRR-NR is a masterbatch having 50PHR of 6-nylon (melting point of 6-nylon: 221°C) per 100PHR of natural rubber.

Since FRR-NR is a mixed masterbatch, 6-nylon always amounts to one third of the total amount when weighed (50PHR/150PHR). For this reason, if the amount of 6-nylon used is changed, the amount of natural rubber is also changed. Therefore, the amount of natural rubber is adjusted to realize the above composition. For example, if the amount of 6-nylon is set to be 5PHR, the amount of natural rubber -is automatically set to 10PHR in Example 6. Accordingly, 50PHR of natural rubber is added for adjustment so that the total amount of natural rubber is 60PHR.

At the time of kneading with rubber, it is desirable to firstly produce another masterbatch comprising FRR-NR (such as UBEPOL-HE0100), part of polymer and part of carbon black, and then knead the resultant product with the rest of the materials. In this way, dispersibility of short fiber can be improved.

If the amount of polyamide short fiber used is equal to or less than 1PHR, the tensile stress at 10% elongation and hardness are lowered. It is not favorable since especially the tensile stress at 10% elongation falls. If the amount of polyamide short fiber used is equal to or more than 30PHR, bagging in the roll process occurs frequently. It is not favorable since overall working property as a compound declines. Furthermore, kneading property with rubber is worsened and dispersibility of nylon is also lowered. Moreover, such a rubber composition is of over quality. The range of 2-20PHR is particularly preferable.

As polyamide short fiber, nylon 6, nylon 12, nylon 610, nylon 611, nylon 612, etc., which have a melting point of about 190-235°C, can be used. These nylons can be mixed with a suitable amount of natural rubber, etc., depending on the dispersibility, to produce a masterbatch. Otherwise, in consideration of the dispersibility, working property, etc., natural rubber, high or low density polyethylene and polyamide short fiber can be mixed to produce a masterbatch. In the present invention, since the nylon surface is chemically bonded to the rubber component, it is possible to reinforce the rubber effectively. It is preferable that polyamide fiber to be used in the present invention is in some way bonded to a rubber molecule chemically by linear combination with a coupling agent or graft combination, for example.

The average diameter of polyamide short fiber is 0.05-1.0 µm, more preferably 0.1-0.6 µm, more particularly 0.2-0.4 µm. It is preferable that 90% or more (weight ratio) of polyamide short rubber has a diameter of 1 µm or less. If the average diameter is 0.05 µm or less, cutting is likely to occur during kneading. If the average diameter exceeds 1 µm, polyamide short fiber is regarded as a foreign body. It is not favorable since durability of the rubber tends to be lowered. The average fiber length is preferably 100-2000 µm, more preferably 200-1000 µm, more particularly 200-500 µm.

If the average fiber length is equal to or less than 100 µm, orientation is inferior and reinforcing effect tends to be small. If the average fiber length is equal to or more than 2000µm, cutting tends to occur during kneading and it is not desirable. The "average fiber length/average diameter" is preferably set to be around 100-2000, more preferably 100-1000. If the "average fiber length/average diameter" is equal to or less than 100, reinforcing property tends to be small. If the "average fiber length/average diameter" is equal to or more than 2000, the dispersibility tends to be lowered and it is not desirable.

As shown in Table 2, as the rubber composition comprising 1-30PHR of polyamide short fiber chemically bonded to diene rubber is mainly used, the tensile stress at 10% elongation and hardness required for the base rubber can be effectively obtained. Such base rubber is also superior in compression set. By reinforcing the rubber composition with short fiber with such properties, abrasion resistance, crack resistance, etc. can be improved. Therefore, although the protrusion 20 is subject to receive an excess load during assembling, it is not easy for cuts and cracks to be generated on the protrusion 20. Durability against damages of the protrusion 20 as above is improved even during traveling of the vehicle.

The hardness was tested by JIS-K6253: Type A durometer hardness test, the tensile stress at 10% elongation by JIS-K6251: vulcanized rubber tension test method (Tension speed is set to be 100mm/min to measure the tensile stress at lower elongation.), and the compression set by JIS-K6262: vulcanized rubber compression set test method, for 70°C × 24 hours (the same conditions as in Table 1).

It is preferable that carbon black as filler is classified as HAF grade or better and the amount to be used is 50-100PHR. Other than cashew degenerated phenol resin, other oil degenerated products or non-degenerated products can be used with proper ratio as phenol resin for raising hardness (they may not be used al all). Wax used may be microcrystalline wax, etc. Anti-oxidant used may be 6C, IPPD, ADPAL, TMDQ, PAN, DPPD, MBI, etc. Vulcanization accelerator used may be sulfenamide like BBS, CBS, etc. Hexamethylenetetramine was used as a hardening agent of phenol resin (the same as Table 1).

**Table 3. Composition and property data**

| PHR | | | | | |
|---|---|---|---|---|---|
| | Comp.Ex.1 | Ex.10 | Ex.11 | Ex.12 | Ex.13 |
| natural rubber | 60 | 80 | 60 | 40 | 40 |
| butadiene rubber | 40 | - | - | - | - |
| VCR412 | - | 20 | 40 | 60 | 60 |
| nylon short fiber amount | - | 1 | 5 | 10 | 20 |
| carbon black (HAF) | 80 | 80 | 80 | 80 | 80 |
| cashew degenerated phenol resin | 5 | 5 | 5 | 5 | 5 |
| zinc flower No. 3 | 5 | 5 | 5 | 5 | 5 |
| stearic acid | 2 | 2 | 2 | 2 | 2 |
| wax | 2 | 2 | 2 | 2 | 2 |
| anti-oxidant 6C | 2 | 2 | 2 | 2 | 2 |
| aromatic oil | 20 | 20 | 20 | 20 | 20 |
| sulfur | 2 | 2 | 2 | 2 | 2 |
| vulcanization accelerator (BBS) | 1 | 1 | 1 | 1 | 1 |
| hexamethylenetetramine | 0.5 | 0.5 | 0.5 | 0.5 | 0.5 |
| Type A durometer hardness | 75 | 76 | 81 | 84 | 84 |
| 10% elongation (MPa) | 1.1 | 1.7 | 2.8 | 3.9 | 4.5 |
| compression set (%) | 35 | 33 | 29 | 29 | 27 |

Examples 10-13 show the base rubber compositions forming the base rubber layer 2. The rubber compositions comprise a rubber component including 20-60PHR of butadiene rubber containing at least 5 weight % of syndiotactic-1, 2-polybutadiene, and as much other diene rubber such as natural rubber, SBR, BR, etc. as to make a total of 100PHR of all the diene rubber included. In addition to the above, the rubber compositions comprise 1-20PHR of polyamide short fiber per 100PHR of the rubber component, filler such as carbon black, and general rubber chemicals like vulcanizing agent, etc.

The base rubber requires as the properties a tensile stress of 1.5-5MPa at 10% elongation in JIS-K6251: Dumbbell type NO. 1 shape for vulcanized rubber tension test method, and a hardness of A70-100 degrees in JIS-K6253: Type A durometer hardness test.

By using diene rubber comprising 20-60PHR of butadiene rubber containing at least 5 weight % of syndiotactic-1, 2-polybutadiene (and, as much other diene rubber such as natural rubber, SBR, BR, etc. as to make a total of 100PHR of all the diene rubber included), and 1-20PHR of polyamide short fiber, chemically bonded to the diene rubber, per 100PHR of the rubber component, as main components, the aforementioned properties can be obtained.

The amount of butadiene rubber containing syndiotactic-1, 2-polybutadiene used is 20-60PHR. The amount of polyamide short fiber used is 1-20PHR. Polyamide short fiber is chemically bonded to diene rubber. Use of both butadiene rubber and polyamide short rubber can improve the tensile stress at 10% elongation.

By reinforcing the rubber compositions with highly crystalline syndiotactic-1, 2-polybutadiene having a high melting point and further with short fiber, improvement in abrasion resistance, crack resistance, etc. can be attained. Therefore, although an excessive load is likely to be applied to the protrusion 20 during assembling, it is hard for cuts and cracks to be generated on the protrusion 20. Durability against the aforementioned damages to the protrusion 20 is improved even during traveling of the vehicle.

The base rubber of the present invention requires as the properties a tensile stress of 1.5-5MPa at 10% elongation in JIS-K6251: Dumbbell type NO. 1 shape for vulcanized rubber tension test method, and a hardness of A70-100 degrees in JIS-K6253: Type A durometer hardness test. The following properties can be obtained, by mainly using diene rubber containing phenol resin and 20-50PHR of styrene-butadiene copolymer rubber having 40-50 weight % of combined styrene and produced by solution polymerization.

**Table 4. Composition and property data**

| PHR | | | | | |
|---|---|---|---|---|---|
| | Comp.Ex.1 | Ex.14 | Ex.15 | Ex.16 | Ex.17 |
| natural rubber | 60 | 75 | 70 | 60 | 50 |
| butadiene rubber | 40 | - | - | - | - |
| SBR of combined styrene 46% produced by solution polymerization | - | 25 | 30 | 40 | 50 |
| carbon black (HAF) | 80 | 80 | 80 | 80 | 80 |
| cashew degenerated phenol resin | 5 | 5 | 5 | 5 | 5 |
| zinc flower No. 3 | 5 | 5 | 5 | 5 | 5 |
| stearic acid | 2 | 2 | 2 | 2 | 2 |
| wax | 2 | 2 | 2 | 2 | 2- |
| anti-oxidant 6C | 2 | 2 | 2 | 2 | 2 |
| aromatic oil | 20 | 20 | 20 | 20 | 20 |
| sulfur | 2 | 2 | 2 | 0.5 | 0.5 |
| vulcanization accelerator (BBS) | 1 | 1 | 1 | 1 | 1 |
| hexamethylenetetramine | 0.5 | 0.5 | 0.5 | 0.5 | 0.5 |
| Type A durometer hardness | 75 | 81 | 82 | 84 | 87 |
| 10% elongation (MPa) | 1.1 | 1.5 | 1.6 | 1.7 | 1.8 |
| compression set (%) | 35 | 33 | 32 | 30 | 29 |

As shown in Table 4, the rubber compositions of present invention containing phenol resin comprise a rubber component having 25-50PHR of styrene-butadiene copolymer rubber containing 40-50 weight %, which is more than usual SBR (containing around 20-25 weight %), of combined styrene and produced by solution polymerization, and as much other diene rubber as to make a total of 100PHR of all the diene rubber included. In addition to the above, the rubber compositions comprise phenol resin such as cashew degeneration, carbon black, general rubber chemicals like zinc flower No. 3, stearic acid, wax anti-oxidant 6C, aromatic oil, sulfur, vulcanizing agent (BBS), etc., and hexamethylenetetramine which is a hardening agent of phenol resin.

It is preferable that the content of combined styrene is 40-50 weight %. If the content is equal to or less than 40 weight %, it is not desirable since there is a tendency for the tensile stress at 10% elongation and hardness to be lowered. If the amount is equal to or more than 50 weight %, it is also not desirable since there is a tendency for flex/crack resistance, which is an index of durability of the rubber, to be lowered. Furthermore, bagging, etc. may occur during the roll process, and it is not desirable since overall working property as a compound is lowered.

It is preferable that styrene-butadiene copolymer rubber (SBR) is produced by solution polymerization. It is not preferable that styrene-butadiene copolymer rubber (SBR) is produced by emulsification polymerization, since there is a tendency for flex/crack resistance which is an index of durability of the rubber to be lowered. The amount of styrene-butadiene copolymer rubber (SBR) used is 25-50PHR. If the amount is equal to or less than 25PHR, it is not desirable since there is a tendency for the tensile stress at 10% elongation and hardness to be lowered. If the amount is equal to or more than 50PHR, it is not desirable since there is a tendency for flex/crack resistance which is an index of durability of the rubber to be lowered.

It is preferable that carbon black classified as HAF grade or better is used as filler, and the amount used is 50-100PHR. It is further preferable that more than two types of carbon black which are classified as HAF grade or better and which have different structure are mixed. For example, carbon black having oil absorption of around 100ml/100g (Tokai Carbon Co., Ltd.: SEAST N) and of around 75ml/100g (Tokai Carbon Co., Ltd.: SEAST 300) can be used. By using such carbon black, it is possible to improve the flex/crack resistance, which is an index of durability of the rubber, as well as to keep sufficient hardness, etc.

Not only cashew degenerative phenol resin but other oil degenerative products, non-degenerative products (phenol resin), etc. can be used as phenol resin (phenolic resin) with proper ratio. Generally, 5-15PHR of phenol resin is used. It is not preferable that the amount used is equal to or less than 5PHR, since improvement in raising hardness is not remarkable. It is also not preferable that the amount used is equal to or more than 15PHR, since flex/crack resistance of the rubber falls substantially. Using the above composition, a rubber composition superior in flex/crack resistance can be produced. Accordingly, it is possible to effectively prevent the protrusion 20 from being damaged upon assembling described above or during traveling of the vehicle.

An actual vehicle test for checking tire performance was conducted on the following conditions.

A forklift used is FG15, having a load of about 500kg. The traveling surface is made of concrete. The forklift traveled about 5 hours a day for the duration of about 30 days. The traveling course cuts a figure of eight and a lap of the figure is about 50m long. The average traveling speed was 10km/h. The tire size of the rear wheels is 5.00-8/3.00D, and that of the front wheels is 6.50-10/5.00F. The tire was assembled to the rim without using a side flange, a lock ring and a bead seat band of a TB rim.

The rubber composition of Example 11 was adopted for the base rubber. The tread rubber mainly comprises natural rubber. The base height was set to be 40%, the radial fitting margin to be 2%, the axial fitting margin to be 0%, and the ratio of the inner peripheral length of the bead core 6 to the inner peripheral length of the rim (inner peripheral length of the bead core / inner peripheral length of rim) to be 1.03. The total widths of the bead cores 6 were set to be 27% for the rear wheels and 23% for the front wheels.

As a result of the test, it was found that the assembling property is favorable and no damage was produced in the protrusion 20 upon assembling. There was no problem even after traveling of the vehicle. Neither misaligned rim nor damage of the protrusion 20 was produced.

The present invention should not be limited to the described embodiment, and other modifications and variations might be possible without departing from the scope of the invention, as defined by the claims.

INDUSTRIAL AVAILABILITY

As described in details in the above, the vehicle wheel of the present invention can prevent defective assembling, slipping, misaligned rim, and damages in a protrusion and other parts caused by these inconveniences, even if a tire is mounted on a rim without using a bead seat band, a side flange and a locking ring.

## Claims

1. A vehicle wheel comprising a rim (8) on which a solid-core tire (1), having a tread rubber layer (4) and a base rubber layer (2) in which bead cores (6) are arranged, is mounted, the rim (8) being provided with a rim flange (10) on one side face and with a recess (16) on the other side face, the tire (1) being provided with a protrusion (20) to be fitted to the recess (16), wherein
a height of the base rubber layer (2) is set to be 20-70% of a tire height, **characterized in that**
the base rubber layer (2) has a tensile stress of 1.5-5 MPa at 10% elongation in JIS-K6251: Dumbbell type NO. 1 shape for vulcanized rubber tension test method, and a hardness of A70-100 degrees in JIS-K6253: Type A durometer hardness test.

2. The vehicle wheel as set forth in claim 1 wherein a radial fitting margin of the tire (1) when mounted on the rim (8) is set to be 1-4% and an axial fitting margin is set to be - 2-5%.

3. The vehicle wheel as set forth in claim 1 or 2 wherein the inner peripheral length of said bead cores (6) may be 1.01-1.04 times larger than the outer peripheral length of the rim (8), a sum of widths of the bead cores (6) may be 15-35% of a rim width, and the bead cores (6) may be arranged at positions within a range of 30-90% of a tire width.

4. The vehicle wheel as set forth in one of claims 1-3 wherein a width of said recess (16) is set to be 5-30% of the rim width, a depth of the recess (16) is set to be 2-8% of a rim diameter, an angle of the recess (16) is set to be 15-90 degrees, and a height of an axially outer end of the recess (16) is set to be equal to or more than the depth of the recess (16).

5. The vehicle wheel as set forth in one of claims 1-4 wherein said base rubber layer (2) comprises a rubber component including 20-80PHR of butadiene rubber containing at least 5 weight % of syndiotactic-1, 2-polybutadiene and as much other diene rubber as to make a total of 100PHR of all the diene rubber included.

6. The vehicle wheel as set forth in one of claims 1-4 wherein said base rubber layer (2) is composed of diene rubber and comprises 1-30PHR of polyamide short fiber which is chemically bonded to the diene rubber.

7. The vehicle wheel as set forth in one of claims 1-4 wherein said base rubber layer (2) comprises a rubber component including 20-60PHR of butadiene rubber containing at least 5 weight % of cyndiotactic-1, 2-polybutadiene and as much other diene rubber as to make a total of 100PHR of all the diene rubber included, and further comprises 1-20PHR of polyamide short fiber per 100PHR of the rubber component, the polyamide short fiber being chemically bonded to the diene rubber.

8. The vehicle wheel as set forth in one of claims 1-4 wherein the base rubber forming said base rubber layer (2) is composed of diene rubber containing phenol resin, the diene rubber comprising a rubber component including 25-50PHR of styrene-butadiene copolymer rubber containing 40-50 weight-% of combined styrene and produced by solution polymerization, and as much other diene rubber as to make a total of 100PHR of all the diene rubber included.

## Patentansprüche

1. Fahrzeugrad mit einer Felge (8), auf der ein Vollkernreifen (1) mit einer Laufflächen-Gummischicht (4) und einer Grundgummischicht (2), in der Wulstkerne (6) ausgebildet sind, montiert ist, wobei die Felge (8) an einer Stirnseite mit einem Felgenflansch (10) und an der anderen Stirnseite mit einer Ausnehmung (16) versehen ist, wobei der Reifen (1) mit einem Vorsprung (20) zur Einpassung in die Ausnehmung (16) versehen ist, wobei eine Höhe der Grundgummischicht (2) 20-70% einer Reifenhöhe beiträgt,
**dadurch gekennzeichnet, dass** die Grundgummischicht (2) eine Zugbeanspruchung von 1,5-5 MPa bei 10% Ausdehnung bei einem Zugprüfungsverfahren für vulkanisierten Gummi in einem JIS-K6251: Dumbbell Typ Nr. 1 und eine Härte von A70-100 Grad bei Härteprüfung mit einem Härtemesser JIS-K6253: Typ A aufweist.

2. Fahrzeugrad gemäß Anspruch 1, wobei ein radiales Passungsspiel des Reifens (1) bei Montage auf der Felge (8) von 1-4% und ein axiales Passungsspiel von -2-5% vorgesehen ist.

3. Fahrzeugrad gemäß Anspruch 1 oder 2, wobei die innere Umfangslänge der Wulstkerne (6) 1,01-1,04-fach größer als die äußere Umfangslänge der Felge (8) sein kann, eine Summe von Breiten der Wulstkerne (6) 15-35% der Felgenbreite betragen kann und die Wulstkerne (6) in Positionen innerhalb eines Bereichs von 30-90% der Reifenbreite angeordnet sein können.

4. Fahrzeugrad gemäß einem der Ansprüche 1-3, wobei eine Breite der Ausnehmung (16) 5-30% der Felgenbreite beträgt, eine Tiefe der Ausnehmung (16) 2-8% des Felgendurchmessers beträgt, ein Winkel der Ausnehmung (16) 15-90 Grad beträgt und eine Höhe eines in axialer Richtung äußeren Endes der Ausnehmung (16) gleich oder größer als die Tiefe der Ausnehmung (16) gewählt ist.

5. Fahrzeugrad gemäß einem der Ansprüche 1-4, wobei die Grundgummischicht (2) eine Gummikomponente mit 20-80 phr Butadiengummi mit mindestens 5% Gewichtsanteil an syndiotaktischem 1,2-Polybutadien und so viel weiteren Diengummi enthält, dass ein Gesamtwert von 100 phr an insgesamt enthaltenem Diengummi erreicht wird.

6. Fahrzeugrad gemäß einem der Ansprüche 1-4, wobei die Grundgummischicht (2) aus Diengummi besteht und 1-30 phr an Polyamidkurzfasern enthält, die mit dem Diengummi chemisch verbunden sind.

7. Fahrzeugrad gemäß einem der Ansprüche 1-4, wobei die Grundgummischicht (2) eine Gummikomponente mit 20-60 phr an Butadiengummi mit mindestens 5% Gewichtsanteil an syndiotaktischem 1,2-Polybutadien und so viel weiteren Diengummi enthält, dass ein Gesamtwert von 100 phr an insgesamt enthaltenem Diengummi erreicht wird, und ferner 1-20 phr an Polymidkurzfasern pro 100 phr der Gummikomponente enthält, wobei die Polymidkurzfasern mit dem Diengummi chemisch verbunden sind.

8. Fahrzeugrad gemäß einem der Ansprüche 1-4, wobei der die Grundgummischicht (2) bildende Grundgummi aus Diengummi mit Phenolharz besteht, wobei der Diengummi eine Gummikomponente umfasst, die 25-50 phr an Butadienstyrolcopolymer-Gummi mit 40-50 % Gewichtsanteil an gebundenem Styrol enthält und durch Lösungspolymerisation hergestellt ist, und so viel weiteren Diengummi enthält, dass ein Gesamtwert von 100 phr an insgesamt enthaltenem Diengummi erreicht wird.

## Revendications

1. Roue de véhicule comportant une jante (8) sur laquelle est monté un pneu plein (1) ayant une couche de gomme de bande de roulement (4) et une couche de gomme de base (2) dans laquelle sont arrangées des tringles de talon (6), la jante (8) étant munie d'une joue de jante (10) sur une face latérale et d'un évidement (16) sur l'autre face latérale, le pneu (1) étant muni d'une saillie (20) prévue pour s'emboîter dans l'évidement (16), dans laquelle
une hauteur de la couche de gomme de base (2) est prévue pour représenter 20 à 70 % d'une hauteur du pneu,
**caractérisée par le fait que** la couche de gomme de base (2) a une contrainte de traction de 1,5 à 5 MPa pour 10 % d'élongation selon une méthode d'essai de traction sur caoutchouc vulcanisé au JIS-K6251 : Dumbbell type n°1, sa dureté étant de A70-100 degrés selon un test de dureté au duromètre JIS-K6253 : type A.

2. Roue de véhicule selon la revendication 1, dans laquelle une marge de montage radiale du pneu (1), lorsqu'elle est montée sur la jante (8), est prévue pour représenter 1 à 4 % et une marge de montage axiale est prévue pour représenter -2 à 5 %.

3. Roue de véhicule selon la revendication 1 ou 2, dans laquelle la longueur périphérique interne desdites tringles de talon (6) peut être 1,01 à 1,04 fois plus importante que la longueur périphérique interne de la jante (8), une somme des largeurs des tringles de talon (6) peut représenter 15 à 35 % d'une largeur de jante, et les tringles de talon (6) peuvent être disposées à des positions situées entre 30 et 90 % d'une largeur de pneu.

4. Roue de véhicule selon l'une des revendications 1 à 3, dans laquelle une largeur dudit évidement (16) est prévue pour représenter 5 à 30 % de la largeur de la jante, une profondeur de l'évidement (16) est prévue pour représenter 2 à 8 % d'un diamètre de jante, un angle de l'évidement (16) est prévu pour représenter 15 à 90 degrés, et une hauteur d'une extrémité axialement extérieure de l'évidement (16) est prévue pour être égale ou supérieure à la profondeur de l'évidement (16).

5. Roue de véhicule selon l'une des revendications 1 à 4, dans laquelle ladite couche de gomme de base (2) comporte un composant en caoutchouc comprenant 20 à 80 PHR de caoutchouc butadiène contenant au moins 5 % de poids de 1,2-polybutadiène syndiotactique et autant d'autre caoutchouc diène afin d'atteindre un total de 100 PHR de tout le caoutchouc diène compris.

6. Roue de véhicule selon l'une des revendications 1 à 4, dans laquelle ladite couche de gomme de base (2) est composée de caoutchouc diène et comporte 1-30 PHR de fibres courtes en polyamide chimiquement liées au caoutchouc diène.

7. Roue de véhicule selon l'une des revendications 1 à 4, dans laquelle ladite couche de gomme de base (2) comporte un composant en caoutchouc comprenant 20 à 60 PHR de caoutchouc butadiène contenant au moins 5 % de poids de 1,2-polybutadiène syndiotactique et autant d'autre caoutchouc diène afin d'atteindre un total de 100 PHR de tout le caoutchouc diène compris, et comporte en outre 1 à 20 PHR de fibres courtes en polyamide pour 100 PHR du composant en caoutchouc, les fibres courtes en polyamide étant chimiquement liées au caoutchouc diène.

8. Roue de véhicule selon l'une des revendications 1 à 4, dans laquelle la gomme de base formant ladite couche de gomme de base (2) comporte du caoutchouc diène contenant de la résine phénolique, le caoutchouc diène comportant un composant en caoutchouc comprenant 25 à 50 PHR de caoutchouc copolymère de styrène-butadiène contenant 40 à 50 % de poids de styrène combiné et produit par polymérisation en solution, et autant d'autre caoutchouc diène afin d'atteindre un total de 100 PHR de tout le caoutchouc diène compris.
